# EUROPEAN PATENT APPLICATION

(11) **EP 2 144 452 A1**
(43) Date of publication of application: **13.01.2010**
(21) Application number: 08752065.6
(22) Date of filing: 24.04.2008
(51) Int. Cl.: H04Q 7/32, H04J 3/16, H04Q 7/20

(54) **MOBILE COMMUNICATION METHOD, WIRELESS BASE STATION, MOBILE STATION, AND PROCESSOR**

(30) Priority: 24.04.2007 JP 2007114900
(71) Applicant: NTT DoCoMo, Inc., Chiyoda-ku Tokyo 100-6150 (JP)
(72) Inventor: HARADA, Atsushi, Chiyoda-ku Tokyo 100-6150 (JP); ISHII, Minami, Chiyoda-ku Tokyo 100-6150 (JP)
(74) Representative: HOFFMANN EITLE
(86) International application number: PCT/JP2008/057976
(87) International publication number: WO 2008/133306

(57) **Abstract**

A mobile communication method according to the present invention includes the steps of: determining to change a reception cycle of a downlink data signal in the mobile station, from a continuous reception cycle to a discontinuous reception cycle; releasing the uplink dedicated resources being allocated to the mobile station (UE), in response to a result of the determination; and establishing uplink or downlink synchronization between the radio base station (eNB) and the mobile station (UE), and setting up the uplink dedicated resources, when transmission of an uplink data signal or a downlink data signal is to be resumed.

## Description

### TECHNICAL FILED

The present invention relates to a mobile communication method in which a mobile station transmits a control signal to a radio base station through uplink dedicated resources. The present invention also relates to the radio base station, the mobile station, and a processor.

### BACKGROUND ART

Standardization of radio access schemes, such as "LTE (Long Term Evolution)", has recently been underway by the 3GPP. Such radio access schemes are configured so that signals from mobile stations UE are orthogonal to each other, if difference in reception timings of signals from the mobile stations UE in a radio base station eNB is within a certain range (the length of a cyclic prefix given to each information symbol in a radio sub-frame).

To maintain the orthogonality of signals from the mobile stations UE, namely, to make the difference in the reception timings of signals from the mobile stations UE in the radio base station eNB fall within the certain range, a transmission timing of a signal in each mobile station UE needs to be corrected. For correcting the transmission timing, the radio base station eNB measures an offset between the reception timing of a signal from each mobile station UE and a reference reception timing, and notifies the mobile station UE of the measured offset.

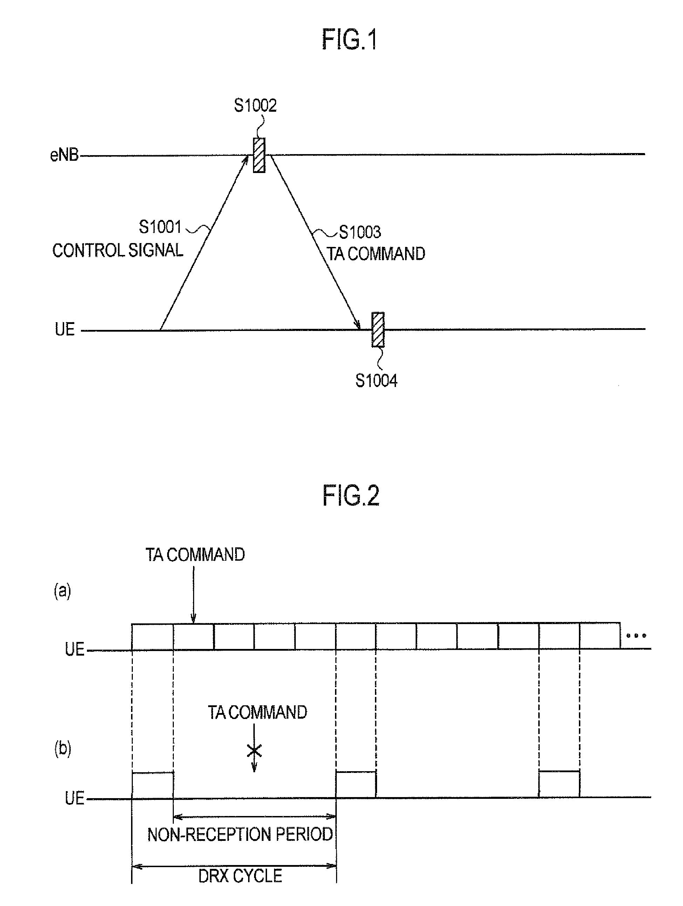

Fig. 1 illustrates an example of such operation. As Fig. 1 shows, in Step S1001, a mobile station UE transmits a control signal (e.g., Sounding Reference Signal, CQI information, and Scheduling Request) through uplink dedicated resources (e.g., PUCCH: Physical Uplink Control Channel) set up with a radio base station eNB (see Non-patent Document 1).

In Step S1002, the radio base station eNB measures an offset between a reception timing of the received control signal and the reference reception timing.

In Step S1003, as a MAC-control-PDU, the radio base station eNB transmits a TA (Timing Advance) command to the mobile station UE, in order to notify of a result of the measurement.

In Step S1004, according to the measurement result thus notified by the received TA command, the mobile station UE adjusts a transmission timing of an uplink data signal (e.g., a user data signal).
Non-patent Document 1: 3GPP TSG RAN WG1 Meeting #47bis R1-070106, January 15, 2007

### DISCLOSURE OF THE INVENTION

However, radio access schemes, such as LTE, are configured to employ a DRX (Discontinuous Reception) technique, in order to save power consumption by the mobile stations UE.

Here, as Fig. 2 (a) shows, while the reception cycle in the mobile station UE is the continuous reception cycle, the mobile station UE can always receive the TA command transmitted from the radio base station eNB. However, as Fig. 2(b) shows, when the reception cycle of a downlink data signal in the mobile station is the DRX cycle, the mobile station UE cannot receive the TA command transmitted from the radio base station eNB in non-reception periods (periods defined for receiving no downlink data signals).

Accordingly, in the non-reception periods, the mobile station UE cannot detect occurrence of uplink out-of-synchronization, and therefore cannot adjust the transmission timing of uplink data signals.

As a result, the following problem may arise. Specifically, the mobile station UE transmits an uplink data signal (e.g., ACK/NACK being receipt confirmation information in the HARQ process) through uplink shared resources (e.g., UL-SCH: Uplink Shared Channel) set up with the radio base station eNB. Consequently, the uplink data signal interferes with a signal transmitted from a different mobile station UE.

The present invention has been made in consideration of the above problem, and has an objective to provide a mobile communication method, a radio base station, a mobile station, and a processor that allow prevention of a situation in which a signal of a mobile station interferes with a signal transmitted from a different mobile station, even if the mobile station employs the DRX technique.

A first aspect of the present invention is summarized as a mobile communication method in which a mobile station transmits a control signal to a radio base station through uplink dedicated resources, the method including the steps of: determining to change a reception cycle of a downlink data signal in the mobile station, from a continuous reception cycle to a discontinuous reception cycle; releasing the uplink dedicated resources being allocated to the mobile station, in response to a result of the determination; and establishing uplink or downlink synchronization between the radio base station and the mobile station, and setting up the uplink dedicated resources, when transmission of an uplink data signal or a downlink data signal is to be resumed.
A second aspect of the present invention is summarized as a mobile communication method in which a mobile station transmits a control signal to a radio base station through uplink dedicated resources, the method including the steps of: determining to change a reception cycle of a downlink data signal in the mobile station, from a first discontinuous reception cycle to a second discontinuous reception cycle longer than the first discontinuous reception cycle; releasing the uplink dedicated resources being allocated to the mobile station, in response to a result of the determination; and establishing uplink or downlink synchronization between the radio base station and the mobile station, and setting up the uplink dedicated resources, when transmission of an uplink data signal or a downlink data signal is to be resumed.

A third aspect of the present invention is summarized as a radio base station that receives a control signal from a mobile station through uplink dedicated resources, the radio base station including: a reception cycle controller unit configured to control a reception cycle of a downlink data signal in the mobile station; an uplink receiver unit configured to release the uplink dedicated resources being allocated to the mobile station, when it is determined to change the reception cycle of a downlink data signal in the mobile station, from a continuous reception cycle to a discontinuous reception cycle; and a synchronization establishing unit configured to establish uplink or downlink synchronization between the radio base station and the mobile station, and to set up the uplink dedicated resources, when transmission of an uplink data signal or a downlink data signal is to be resumed.

A fourth aspect of the present invention is summarized as a radio base station that receives a control signal from a mobile station through uplink dedicated resources, the radio base station including: a reception cycle controller unit configured to control a reception cycle of a downlink data signal in the mobile station; an uplink receiver unit configured to release the uplink dedicated resources being allocated to the mobile station, when it is determined to change the reception cycle of a downlink data signal in the mobile station, from a first discontinuous reception cycle to a second discontinuous reception cycle longer than the first discontinuous reception cycle; and a synchronization establishing unit configured to establish uplink or downlink synchronization between the radio base station and the mobile station, and to set up the uplink dedicated resources, when transmission of an uplink data signal or a downlink data signal is to be resumed.

A fifth aspect of the present invention is summarized as a mobile station that transmits a control signal to a radio base station through uplink dedicated resources, the mobile station including: a reception cycle controller unit configured to control a reception cycle of a downlink data signal in the mobile station; an uplink transmitter unit configured to release the uplink dedicated resources being allocated to the mobile station, when it is determined to change the reception cycle of a downlink data signal in the mobile station, from a continuous reception cycle to a discontinuous reception cycle; and a synchronization establishing unit configured to establish uplink synchronization between the radio base station and the mobile station, and to set up the uplink dedicated resources, when transmission of an uplink data signal is to be resumed.

A sixth aspect of the present invention is summarized as a mobile station that transmits a control signal to a radio base station through uplink dedicated resources, the mobile station including: a reception cycle controller unit configured to control a reception cycle of a downlink data signal in the mobile station; an uplink transmitter unit configured to release the uplink dedicated resources being allocated to the mobile station, when it is determined to change the reception cycle of a downlink data signal in the mobile station, from a first discontinuous reception cycle to a second discontinuous reception cycle longer than the first discontinuous reception cycle; and a synchronization establishing unit configured to establish uplink synchronization between the radio base station and the mobile station, and to set up the uplink dedicated resources, when transmission of an uplink data signal is to be resumed.

A seventh aspect of the present invention is summarized as a processor that generates a control signal transmitted through uplink dedicated resources, the processor being configured to: control a reception cycle for a downlink data signal; release the uplink dedicated resources being allocated, when it is determined to change the reception cycle for a downlink data signal, from a continuous reception cycle to a discontinuous reception cycle; and establish uplink synchronization and set up the uplink dedicated resources, when transmission of an uplink data signal is to be resumed.

A eighth aspect of the present invention is summarized as a processor that generates a control signal transmitted through uplink dedicated resources, the processor being configured to: control a reception cycle for a downlink data signal; release the uplink dedicated resources being allocated, when it is determined to change the reception cycle for a downlink data signal, from a first discontinuous reception cycle to a second discontinuous reception cycle longer than the first discontinuous reception cycle; and establish uplink synchronization and set up the uplink dedicated resources, when transmission of an uplink data signal is to be resumed.

As described, the present invention can provide a mobile communication method, a radio base station, a mobile station, and a processor that allow prevention of a situation in which a signal of a mobile station interferes with a signal transmitted from a different mobile station, even if the mobile station employs the DRX technique.

### BRIEF DESCRIPTION OF THE DRAWINGS

[Fig. 1] Fig. 1 is a diagram illustrating a procedure for maintaining uplink synchronization between a radio base station and a mobile station in a conventional mobile communication system.
[Fig. 2] Fig. 2 is a diagram illustrating a problem in the conventional mobile communication system.
[Fig. 3] Fig. 3 is a diagram showing the overall configuration a mobile communication system according to a first embodiment of the present invention.
[Fig. 4] Fig. 4 is a functional block diagram of a mobile station according to the first embodiment of the present invention.
[Fig. 5] Fig. 5 is a functional block diagram of a radio base station according to the first embodiment of the present invention.
[Fig. 6] Fig. 6 is a flowchart showing an operation of the mobile communication system according to the first embodiment of the present invention.
[Fig. 7] Fig. 7 is a diagram showing an example of a procedure for resuming transmission of downlink data signals in the mobile communication system according to the first embodiment of the present invention.
[Fig. 8] Fig. 8 is a diagram showing an example of a procedure for resuming transmission of uplink data signals in the mobile communication system according to the first embodiment of the present invention.
[Fig. 9] Fig. 9 is a diagram showing an example of the hardware configuration of the mobile station according to each embodiment of the present invention.

### BEST MODES FOR CARRYING OUT THE INVENTION

### (Configuration of Mobile Communication System According to First Embodiment of Present Invention)

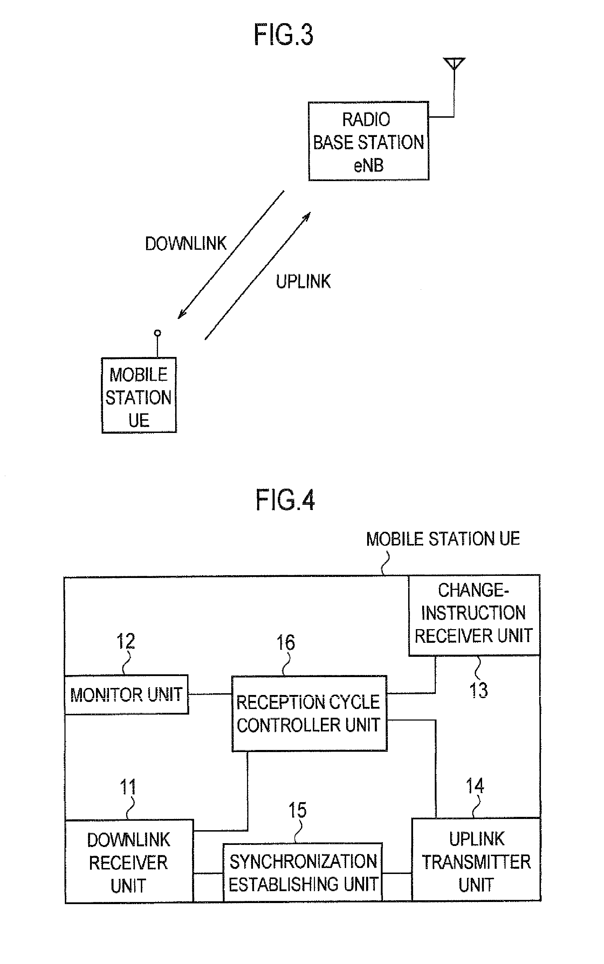

Referring to Figs. 3 to 6, a description will be given of the configuration of a mobile communication system according to a first embodiment of the present invention.

As Fig. 3 shows, the mobile communication system according to the present embodiment includes a radio base station eNB and a mobile station UE.

The radio base station eNB is configured to receive a control signal (e.g., Sounding Reference Signal, CQI information, and Scheduling Request) from the mobile station UE through uplink dedicated resources (e.g., PUCCH).

For example, the uplink dedicated resources may be formed of multiple physical channels. In such a case, the radio base station eNB may be configured to receive Sounding Reference Signal, CQI information, and Scheduling Request, through the different respective physical channels.

In addition, the radio base station eNB is configured to receive an uplink data signal (e.g., a user data signal) from the mobile station UE through uplink shared resources (e.g., UL-SCH), and to transmit a downlink data signal (e.g., a user data signal) to the mobile station UE through downlink shared resources (e.g., DL-SCH: Downlink Shared Channel).

The mobile station UE is configured to transmit an uplink data signal (e.g., a user data signal) to the radio base station eNB through uplink shared resources (e.g., UL-SCH), and to transmit a control signal (e.g., Sounding Reference Signal, CQI information, and Scheduling Request) to the radio base station eNB through uplink dedicated resources (e.g., PUCCH).

When the uplink dedicated resources are formed of multiple physical channels, for example, the mobile station UE may be configured to transmit Sounding Reference Signal, CQI information, and Scheduling Request, through the different respective physical channels.

The mobile station UE is also configured to receive a downlink data signal (e.g., a user data signal) from the radio base station eNB through downlink shared resources (e.g., DL-SCH).

As Fig. 4 shows, the mobile station UE according to the present embodiment includes a downlink receiver unit 11, a monitor unit 12, a change-instruction receiver unit 13, an uplink transmitter unit 14, a synchronization establishing unit 15, and a reception cycle controller unit 16.

The downlink receiver unit 11 is configured to receive a downlink data signal (e.g., a user data signal) transmitted from the radio base station eNB through downlink shared resources (e.g., DL-SCH).

The monitor unit 12 is configured as follows. When the reception cycle of a downlink data signal in the mobile station UE is a DRX cycle, in a reception period defined for receiving downlink data signals, the monitor unit 12 monitors whether or not there is any message notifying of a presence of a downlink data signal for the mobile station UE, through downlink control channel (e.g., L1/L2 Control Channel).

Note that the reception period is configured to be set by RRC signaling. One reception period may correspond to a period of one sub-frame among sub-frames forming a radio frame, or may correspond to a period of multiple sub-frames among sub-frames forming a radio frame.

The change-instruction receiver unit 13 is configured to receive either a change instruction for instructing the mobile station UE to change a reception cycle of a downlink data signal in the mobile station UE, from a continuous reception cycle to a first DRX cycle (Short-DRX cycle). Or the change-instruction receiver unit 13 is configured to receive either a change instruction for instructing the mobile station UE to change a reception cycle of a downlink data signal in the mobile station, from the first DRX cycle (Short-DRX cycle) to a second DRX cycle (Long-DRX cycle).

Here, the second DRX cycle is longer than the first DRX cycle.

For example, the change instruction may be configured to be notified of by the radio base station eNB through MAC signaling.

The uplink transmitter unit 14 is configured to transmit an uplink data signal (e.g., a user data signal) to the radio base station eNB through uplink shared resources (e.g., UL-SCH).

The uplink transmitter unit 14 is configured to transmit a control signal (e.g., Sounding Reference Signal, CQI information, and Scheduling Request) to the radio base station eNB through uplink dedicated resources (e.g., PUCCH).

The uplink transmitter unit 14 may also be configured to release the uplink dedicated resources (e.g., PUCCH) being allocated to the mobile station UE, when it is determined to change a reception cycle of a downlink data signal in the mobile station UE, from a continuous reception cycle to a first DRX cycle (Short-DRX cycle).

The uplink transmitter unit 14 may also be configured to release the uplink dedicated resources (e.g., PUCCH) being allocated to the mobile station UE, when it is determined to change a reception cycle of a downlink data signal in the mobile station UE, from the first DRX cycle (Short-DRX cycle) to the second DRX cycle (Long-DRX cycle).

Note that, when the uplink dedicated resources are formed by multiple physical channels, the uplink transmitter unit 14 is configured to release all the physical channels.

The synchronization establishing unit 15 is configured to establish uplink synchronization between the radio base station eNB and the mobile station UE, and to thus set up uplink dedicated resources between the radio base station eNB and the mobile station UE, when transmission of uplink data signals is to be resumed.

Moreover, the synchronization establishing unit 15 is configured to establish uplink synchronization between the radio base station eNB and the mobile station UE, and to thus set up uplink dedicated resources between the radio base station eNB and the mobile station UE, when transmission of a downlink data signals is to be resumed.

The reception cycle controller unit 16 is configured to control a reception cycle of a downlink data signal in the mobile station UE.

Specifically, when the downlink receiver unit 11 receives no downlink data signal for a predetermined period in the continuous reception cycle, the reception cycle controller unit 16 may determine to change the reception cycle of a downlink data signal in the mobile station UE, from the continuous reception cycle to the first DRX cycle (Short-DRX cycle).

Further, when the downlink receiver unit 11 receives no downlink data signal for a predetermined period in the first DRX cycle (Short-DRX cycle), the reception cycle controller unit 16 may determine to change the reception cycle of a downlink data signal in the mobile station UE, from the first DRX cycle (Short-DRX cycle) to the second DRX cycle (Long-DRX cycle).

Moreover, in response to the change instruction received by the change-instruction receiver unit 13, the reception cycle controller unit 16 may determine to change a reception cycle of a downlink data signal in the mobile station UE, either from the continuous reception cycle to the first DRX cycle (Short-DRX cycle), or from the first DRX cycle (Short-DRX cycle) to the second DRX cycle (Long-DRX cycle).

Here, the reception cycle controller unit 16 may be configured to start the first DRX cycle (Short-DRX cycle) or the second DRX cycle (Long-DRX cycle), according to a DRX cycle specified by MAC signaling (according to a cycle in which a reception period occurs).

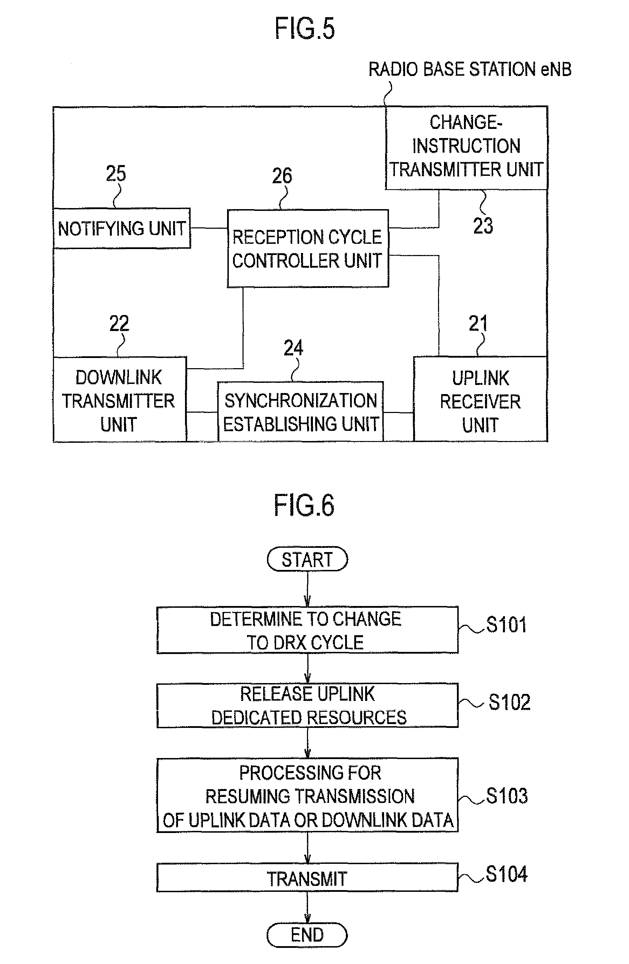

As Fig. 5 shows, the radio base station eNB according to the present embodiment includes an uplink receiver unit 21, a downlink transmitter unit 22, a synchronization establishing unit 24, a notifying unit 25, and a reception cycle controller unit 26.

The uplink receiver unit 21 is configured to receive an uplink data signal (e.g., a user data signal) transmitted from the mobile station UE through uplink shared resources (e.g., UL-SCH).

The uplink receiver unit 21 is configured to receive a control signal (e.g., Sounding Reference Signal, CQI information, and Scheduling Request) transmitted from the mobile station UE through uplink dedicated resources (e.g., PUCCH).

The uplink receiver unit 21 may also be configured to release the uplink dedicated resources (e.g., PUCCH) being allocated to the mobile station UE, when it is determined to change a reception cycle of a downlink data signal in the mobile station UE, from the continuous reception cycle to the first DRX cycle (Short-DRX).

In addition, the uplink receiver unit 21 may also be configured to release the uplink dedicated resources (e.g., PUCCH) being allocated to the mobile station UE, when it is determined to change a reception cycle of a downlink data signal in the mobile station UE, from the first DRX cycle (Short-DRX cycle) to the second DRX cycle (Long-DRX cycle).

Note that, when the uplink dedicated resources are formed by multiple physical channels, the uplink receiver unit 21 is configured to release all the physical channels.

The downlink transmitter unit 22 is configured to transmit a downlink data signal (e.g., user data signal) to the mobile station UE through downlink shared resources (e.g., DL-SCH).

The change-instruction transmitter unit 23 is configured to transmit either a change instruction instructing the mobile station UE to change a reception cycle of a downlink data signal in the mobile station UE, from the continuous reception cycle to the first DRX cycle (Short-DRX cycle). Or the change-instruction transmitter unit 23 is configured to transmit either a change instruction instructing the mobile station UE to change a reception cycle of a downlink data signal in the mobile station UE, from the first DRX cycle (Short-DRX cycle) to the second DRX cycle (Long-DRX cycle), in response to the instruction from the reception cycle controller 26.

For example, the change-instruction transmitter unit 23 is configured to notify the change instruction through MAC signaling.

The synchronization establishing unit 24 is configured to establish uplink synchronization between the radio base station eNB and the mobile station UE, and to thus set up uplink dedicated resources between the radio base station eNB and the mobile station UE, when transmission of uplink data signals is to be resumed.

Moreover, the synchronization establishing unit 24 is configured to establish uplink synchronization between the radio base station eNB and the mobile station UE and to thus set up uplink dedicated resources between the radio base station eNB and the mobile station UE, when transmission of downlink data signals is to be resumed.

The notifying unit 25 is configured as follows. When the a reception cycle of a downlink data signal in the mobile station UE is the DRX cycle, in the above-described reception period, the notifying unit 25 notifies that there is a message notifying of a presence of a downlink data signal for the mobile station UE, through downlink control channel (e.g., L1/L2 Control Channel).

The reception cycle controller unit 26 is configured to control the reception cycle of a downlink data signal in the mobile station UE.

Specifically, when the downlink transmitter unit 22 transmits no downlink data signal for a predetermined period in the continuous reception cycle, the reception cycle controller unit 26 may determine to change the reception cycle of a downlink data signal in the mobile station UE, from the continuous reception cycle to the first DRX cycle (Short-DRX cycle).

Further, when the downlink transmitter unit 22 transmits no downlink data signal for a predetermined period in the first DRX cycle (Short-DRX cycle), the reception cycle controller unit 26 may determine to change the reception cycle of a downlink data signal in the mobile station UE, from the first DRX cycle (Short-DRX cycle) to the second DRX cycle (Long-DRX cycle).

Note that part or all of the functions (modules) constituting the mobile station UE shown in Fig. 4 and the radio base station eNB shown in Fig. 5 may be configured to be implemented with a general-purpose processor, a DSP (Digital Signal Processor), an ASIC (Application Specific Integrated Circuit), an FPGA (Field Programmable Gate Array), discrete gate or transistor logic, discrete hardware components, any combination of these, or the like.

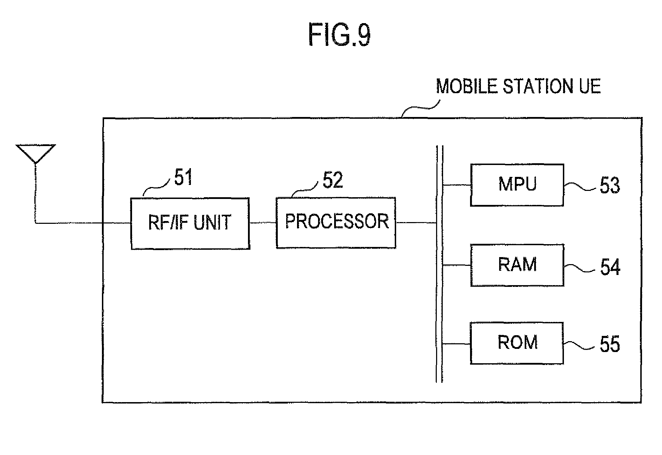

As an example, a case is described in which the mobile station UE includes an RF/IF unit 51 performing radio signal processing, a processor 52 performing baseband signal processing, an MPU (Micro Processing Unit) 53 executing applications, a RAM (Random Access Memory) 54, and a ROM (Read Only Memory), as shown in Fig. 9.

In such a case, the processor 52 of the mobile station UE may be configured with a general-purpose processor, a DSP, an ASIC, an FPGA, discrete gate or transistor logic, discrete hardware components, any combination of these, or the like, and may be configured to implement part or all of the functions (modules) constituting the mobile station UE shown in Fig. 4. The description given here takes the mobile station UE as an example; however, with the processor configured as above, the radio base station eNB may implement part or all of the functions (modules) constituting the radio base station eNB shown in Fig. 5.

Here, the general-purpose processor may be a microprocessor or may be a conventional processor, a controller, a microcontroller, or a state machine.

Moreover, the processor may be implemented as any selected combination of computing devices, such as a combination of a DSP and a microprocessor, a combination of multiple microprocessors, or a combination of single or multiple microprocessors and a DSP core.

### (Operation of Mobile Communication System According to First Embodiment of Present Invention)

Referring to Figs. 6 to 8, a description will be given of an operation of the mobile communication system according to the first embodiment of the present invention.

As Fig. 6 shows, in Step S101, the reception cycle controller unit 16 of the mobile station UE determines to change a reception cycle of the mobile station UE, to the first DRX cycle (Short-DRX cycle) or to the second DRX cycle (Long-DRX cycle).

In Step S102, in response to the determination result obtained above, the uplink transmitter unit 14 of the mobile station UE releases the uplink dedicated resources being allocated to the mobile station UE.

In Step S103, when uplink data signal or downlink data signal to be transmitted occurs in the situation where the uplink dedicated resources are kept released, a procedure for resuming transmission of uplink data signals or downlink data signals is carried out.

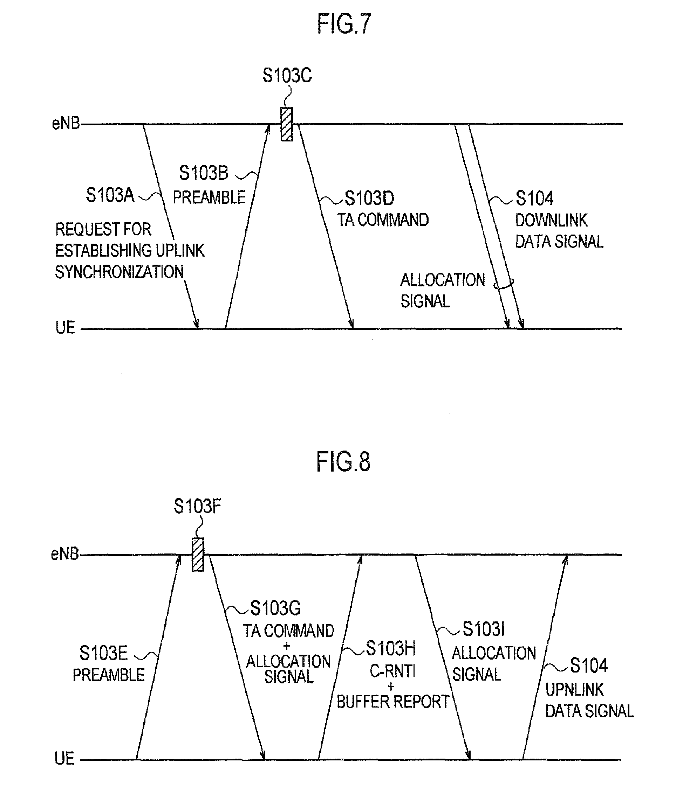

First, referring to Fig. 7, a description will be given of a procedure of resuming transmission of downlink data signals. As Fig. 7 shows, in Step S103A, the synchronization establishing unit 24 of the radio base station eNB transmits an "UL synch request (uplink synchronization establishment request) " to the mobile station UE, in order to establish uplink synchronization between the radio base station eNB and the mobile station UE.

In Step S103B, the synchronization establishing unit 15 of the mobile station UE transmits a preamble specified by the aforementioned "UL synch request", through an asynchronous RACH (random access channel).

Here, the preamble means a data series which is dedicatedly allocated to the mobile station UE. Note that the "UL synch request" may be configured to include not the preamble itself, but an identifier identifying the preamble.

The synchronization establishing unit 15 of the mobile station UE may be configured to use a preamble randomly selected from predetermined preambles instead of using the preamble specified by the aforementioned "UL synch request".

In Step S103C, the synchronization establishing unit 24 of the radio base station eNB measures an offset of the reception timing of the received preamble from a reference reception timing.

In Step S103D, as a MAc-control-PDU, the synchronization establishing unit 24 of the radio base station eNB transmits a TA (Timing Advance) command, in order to notify a result of the measurement. Here, according to the measurement result notified by the received TA command, the synchronization establishing unit 15 of the mobile station UE adjusts the timing for transmitting an uplink data signal.

When no preamble is received from the mobile station UE for a certain period, the downlink transmitter unit 22 of the radio base station eNB determines that the uplink synchronization has been established. Then, in Step S104, the downlink transmitter unit 22 allocates uplink dedicated resources (e.g., PUCCH) to the mobile station UE, and transmits a downlink data signal to the mobile station UE through downlink shared resources (e.g., DL-SCH) being allocated to the mobile station UE.

Then, the uplink transmitter unit 14 of the mobile station UE transmits, for example, CQI information through the uplink dedicated resources being allocated to the mobile station UE.

Secondly, referring to Fig. 8, a description will be given of a procedure of resuming transmission of uplink data signals.

As Fig. 8 shows, in Step S103E, the synchronization establishing unit 15 of the mobile station UE transmits a predetermined preamble through an asynchronous RACH.

In Step S103F, the synchronization establishing unit 24 of the radio base station eNB measures an offset of the reception timing of the received preamble from a reference reception timing.

In Step S103G, as a response to the aforementioned preamble, the synchronization establishing unit 24 of the radio base station eNB transmits a TA (Timing Advance) command, in order to notify a result of the measurement, and also transmits an allocation signal to temporarily allocate uplink shared resources for transmitting a buffer report to be described later.

In Step S103H, according to the measurement result notified by the received TA command, the synchronization establishing unit 15 of the mobile station UE adjusts the timing for transmitting an uplink data signal.

Then, at the adjusted transmission timing and through the uplink shared resources (e.g., UL-SCH) being temporarily allocated, the synchronization establishing unit 15 of the mobile station UE transmits an identifier (C-RNTI: Cell-Radio Netowork Temporary Identifier) for dedicatedly identifying the mobile station in a cell, and transmits a buffer report for notifying buffer information on the mobile station UE.

In Step S103I, having received the C-RNTI and the buffer report described above, the downlink transmitter unit 22 of the radio base station eNB determines that the uplink synchronization has been established, and transmits an allocation signal to the mobile station UE, in order to allocate uplink dedicated resources (e.g., PUCCH).

In Step S104, the uplink transmitter unit 14 of the mobile station UE transmits a control signal through the uplink dedicated resources being allocated to the mobile station UE, and transmits an uplink data signal through the uplink shared resources being allocated to the mobile station UE.

Note that the above operation of the mobile station UE and the radio base station eNB may be implemented by hardware, by a software module executed by a processor, or by a combination of both.

Generally, software which supports radio protocols, such as RRC, RLC, MAC, and PHY, is called a protocol stack (software), and in the software, the lower-ranked protocols (e.g., PHY and MAC) tend to be implemented by hardware as a semiconductor processor. Size reduction and power saving are demanded especially of the mobile stations UE, and therefore the operation of the mobile station UE tends to be implemented by hardware as a semiconductor processor. Moreover, also for small base stations (femto-cell Home eNB), there are similar needs for size reduction and power saving. Accordingly, the operation of such base stations may be implemented by hardware as a semiconductor processor.

The software module may be provided in a storage medium of any form, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and on the storage medium. The storage medium may be integrated on the processor. The storage medium and the processor may be provided in an ASIC. The ASIC may be provided in the mobile station UE and the radio base station eNB. Moreover, the storage medium and the processor may be provided in the mobile station UE and the radio base station eNB as discrete components.

### (Advantageous Effects of Mobile Communication System According to First Embodiment of Present Invention)

In the mobile communication system according to the first embodiment of the present invention, the uplink dedicated resources are configured to be released before the reception cycle of the mobile station UE is changed to the first DRX cycle (Short-DRX period) or to the second DRX cycle (Long-DRX period). Accordingly, a situation is avoided in which the mobile station UE transmits an uplink data signal without knowing the occurrence of out-of-synchronization in the downlink, because the mobile station UE cannot receive a TA command in a non-reception cycle.

The present invention has been described above using the embodiments given above. However, it is apparent to those skilled in the art that the present invention is not limited to the embodiments described herein. The present invention may be carried out as modified or corrected forms without departing from the spirit and scope of the present invention defined by the appended claims. Therefore, the description given herein is for illustrative purposes only and is not intended to limit the present invention whatsoever.

Note that the entire content of Japanese Patent Application No. 2007-114900 (filed on April 24, 2007) is incorporated herein by reference.

### INDUSTRIAL APPLICABILITY

As described above, the mobile communication method, radio base station, mobile station, and processor according to the present invention are useful in radio communications such as mobile communications because they allow prevention of a situation in which a signal of a mobile station interferes with a signal transmitted from a different mobile station, even if the mobile station employs the DRX technique.

## Claims

1. A mobile communication method in which a mobile station transmits a control signal to a radio base station through uplink dedicated resources, the method comprising the steps of:
determining to change a reception cycle of a downlink data signal in the mobile station, from a continuous reception cycle to a discontinuous reception cycle;
releasing the uplink dedicated resources being allocated to the mobile station, in response to a result of the determination; and
establishing uplink or downlink synchronization between the radio base station and the mobile station, and setting up the uplink dedicated resources, when transmission of an uplink data signal or a downlink data signal is to be resumed.

2. A mobile communication method in which a mobile station transmits a control signal to a radio base station through uplink dedicated resources, the method comprising the steps of:
determining to change a reception cycle of a downlink data signal in the mobile station, from a first discontinuous reception cycle to a second discontinuous reception cycle longer than the first discontinuous reception cycle;
releasing the uplink dedicated resources being allocated to the mobile station, in response to a result of the determination; and
establishing uplink or downlink synchronization between the radio base station and the mobile station, and setting up the uplink dedicated resources, when transmission of an uplink data signal or a downlink data signal is to be resumed.

3. A radio base station that receives a control signal from a mobile station through uplink dedicated resources, the radio base station comprising:
a reception cycle controller unit configured to control a reception cycle of a downlink data signal in the mobile station;
an uplink receiver unit configured to release the uplink dedicated resources being allocated to the mobile station, when it is determined to change the reception cycle of a downlink data signal in the mobile station, from a continuous reception cycle to a discontinuous reception cycle; and
a synchronization establishing unit configured to establish uplink or downlink synchronization between the radio base station and the mobile station, and to set up the uplink dedicated resources, when transmission of an uplink data signal or a downlink data signal is to be resumed.

4. A radio base station that receives a control signal from a mobile station through uplink dedicated resources, the radio base station comprising:
a reception cycle controller unit configured to control a reception cycle of a downlink data signal in the mobile station;
an uplink receiver unit configured to release the uplink dedicated resources being allocated to the mobile station, when it is determined to change the reception cycle of a downlink data signal in the mobile station, from a first discontinuous reception cycle to a second discontinuous reception cycle longer than the first discontinuous reception cycle; and
a synchronization establishing unit configured to establish uplink or downlink synchronization between the radio base station and the mobile station, and to set up the uplink dedicated resources, when transmission of an uplink data signal or a downlink data signal is to be resumed.

5. A mobile station that transmits a control signal to a radio base station through uplink dedicated resources, the mobile station comprising:
a reception cycle controller unit configured to control a reception cycle of a downlink data signal in the mobile station;
an uplink transmitter unit configured to release the uplink dedicated resources being allocated to the mobile station, when it is determined to change the reception cycle of a downlink data signal in the mobile station, from a continuous reception cycle to a discontinuous reception cycle; and
a synchronization establishing unit configured to establish uplink synchronization between the radio base station and the mobile station, and to set up the uplink dedicated resources, when transmission of an uplink data signal is to be resumed.

6. A mobile station that transmits a control signal to a radio base station through uplink dedicated resources, the mobile station comprising:
a reception cycle controller unit configured to control a reception cycle of a downlink data signal in the mobile station;
an uplink transmitter unit configured to release the uplink dedicated resources being allocated to the mobile station, when it is determined to change the reception cycle of a downlink data signal in the mobile station, from a first discontinuous reception cycle to a second discontinuous reception cycle longer than the first discontinuous reception cycle; and
a synchronization establishing unit configured to establish uplink synchronization between the radio base station and the mobile station, and to set up the uplink dedicated resources, when transmission of an uplink data signal is to be resumed.

7. A processor that generates a control signal transmitted through uplink dedicated resources, the processor being configured to:
control a reception cycle for a downlink data signal;
release the uplink dedicated resources being allocated, when it is determined to change the reception cycle for a downlink data signal, from a continuous reception cycle to a discontinuous reception cycle; and
establish uplink synchronization and set up the uplink dedicated resources, when transmission of an uplink data signal is to be resumed.

8. A processor that generates a control signal transmitted through uplink dedicated resources, the processor being configured to:
control a reception cycle for a downlink data signal;
release the uplink dedicated resources being allocated, when it is determined to change the reception cycle for a downlink data signal, from a first discontinuous reception cycle to a second discontinuous reception cycle longer than the first discontinuous reception cycle; and
establish uplink synchronization and set up the uplink dedicated resources, when transmission of an uplink data signal is to be resumed.
